# EUROPEAN PATENT APPLICATION

(11) **EP 1 729 049 A1**
(43) Date of publication of application: **06.12.2006**
(21) Application number: 04719112.7
(22) Date of filing: 10.03.2004
(51) Int. Cl.: F16L 11/12

(54) **SPIRAL REINFORCED HOSE**

(30) Priority: 20.02.2004 JP 2004044825
(71) Applicant: Toyox Co., Ltd., Kurobe-shi Toyama 9380806 (JP)
(72) Inventor: NABESHIMA, Yoshikazu, c/o Toyox Co., Ltd., Toyama 9380806 (JP); HAGIHARA, Chihiro, c/o Toyox Co., Ltd., Toyama 9380806 (JP); NOJIMA, Hironori, c/o Toyox Co., Ltd., Toyama 9380806 (JP)
(74) Representative: Lauer, Joachim
(86) International application number: PCT/JP2004/003107
(87) International publication number: WO 2005/080849

(57) **Abstract**

A plurality of stretched monofilaments (2) are spirally wound at an equal pitch in a hose axial direction while the stretched monofilaments (2) are arranged, whereby a pressure-resistant performance in the portions does not deteriorate even when a pitch (S) between these stretched monofilaments (2, 2) narrows and a diameter of the monofilaments is reduced. Therefore, the stretched monofilaments having a small diameter is usable.

## Description

### Technical Field

The present invention relates to a reinforced spiral hose such as a suction hose or a duct hose which is used at a low or negative pressure and which is excellent in pressure resistance and flexibility.

More particularly, the present invention relates to a reinforced spiral hose in which a stretched monofilament is spirally wound in a hose axial direction in a hose main body.

### Background Art

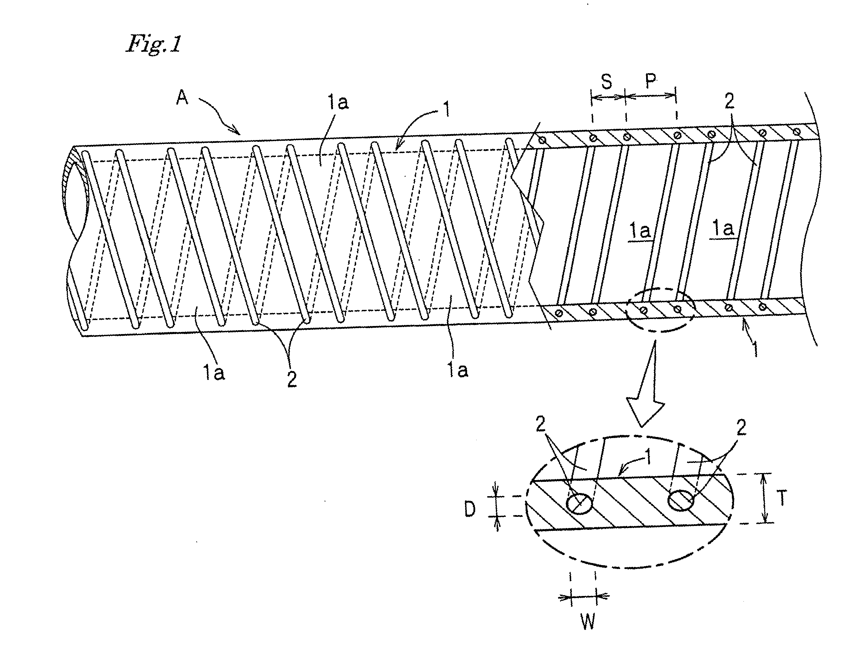

Heretofore, in this type of reinforced spiral hose, a stretched monofilament molded into a coil spring shape and having a large diameter is inserted and wound between an inner layer (inner tube) and an outer layer (outer tube) which constitute a hose main body (resin tube) and which are made of a soft synthetic resin (see, e.g., Patent Document 1).
[Patent Document 1]
   Japanese Utility Model Application Publication No. 63-46783 (Pages 1 and 2, FIGS. 1 to 3)

In such a conventional reinforced spiral hose, however, the stretched monofilament having a large diameter is used, and therefore, in order to produce a hose having a large outer diametric size, the thick stretched monofilament needs to be wound in accordance with a hose size. However, there is usually a remarkably small demand for the thick stretched monofilament, and it is difficult to obtain the thick stretched monofilament because there is not any standard of the thick stretched monofilament in a manufacturer. In addition, there is a problem that the thick stretched monofilament is especially ordered with respect to the manufacturer, and therefore they become remarkably expensive.

Furthermore, when the diameter of the stretched monofilament increases, rigidity also enhances. Therefore, an equipment for winding the monofilament enlarges to deteriorate productivity. Moreover, since the rigidity of the monofilament is high as compared with the soft synthetic resin of the hose main body, concaves and convexes are generated on inner and outer surfaces of the hose, and there has been, for example, a problem that an impurity reservoir such as a liquid reservoir is generated.

To solve the problem, in the present invention, an object of the invention according to claim 1 makes it possible to use stretched monofilaments having a small diameter.

In addition to the object of the invention according to claim 1, an object of the invention according to claim 2 is to further reduce a thickness of a hose and enhance flat degrees of inner and outer surfaces of the hose while improving a pressure-resistant performance.

In addition to the object of the invention according to claim 1 or 2, an object of the invention according to claim 3 is to allow a fluid in the hose to be seen from the outside.

In addition to the object of the invention according to claim 1, 2 or 3, an object of the invention according to claim 4 is to allow the hose to be identified by an identification line in accordance with a use application or a type while preventing the hose from being broken owing to twist.

In addition to the object of the invention according to claim 1, 2, 3 or 4, an object of the invention according to claim 5 is to allow the hose to be easily identified by a color of the stretched monofilaments in accordance with the use application or the type.

### Disclosure of the Invention

To achieve the above objects, the invention according to claim 1 of the present application is characterized in that a plurality of stretched monofilaments are arranged in a hose axial direction and spirally wound at an equal pitch.

The invention according to claim 2 is characterized in that, to a constitution of the invention according to claim 1, there is added a constitution in which a sectional shape of the stretched monofilaments is flattened so that a core width of the monofilaments is larger than a core thickness.

The invention according to claim 3 is characterized in that, to a constitution of the invention according to claim 1 or 2, there is added a constitution in which a pitch between adjacent spirals in the hose axial direction is set to be larger than an interval between the stretched monofilaments arranged in the hose axial direction, and see-through coreless portions are partially formed in the hose axial direction.

The invention according to claim 4 is characterized in that, to a constitution of the invention according to claim 1, 2 or 3, there is added a constitution in which an identification line extending in an axial direction is disposed on an outer surface of a hose main body, and this identification line is provided with a color different from that of the hose main body.

The invention according to claim 5 is characterized in that, to a constitution of the invention according to claim 1, 2, 3 or 4, there is added a constitution in which colors of the plurality of stretched monofilaments arranged in the hose axial direction are changed, and the hose main body is formed of a see-through material.

In the invention according to claim 1 of the present application which has the above constitution, the plurality of stretched monofilaments are arranged in the hose axial direction and spirally wound at the equal pitch, whereby even when an interval between the stretched monofilaments narrows and each liner diameter is reduced, a pressure-resistant performance of the portions does not deteriorate.

Therefore, the stretched monofilaments having a small diameter are usable.

As a result, as compared with a conventional hose in which a stretched monofilament having a large diameter is used, even in a case where a hose having a large outer diametric size is produced, commercial stretched monofilaments which are stably supplied are usable, the hose can inexpensively be manufactured, a thickness of the hose can be reduced, and it is possible to inexpensively provide a lightweight reinforced spiral hose having an excellent flexibility.

Furthermore, since the thin stretched monofilaments have a low rigidity, the inner and outer surfaces of the hose become flat, an impurity reservoir such as a liquid reservoir can be prevented from being generated, and a flow of a fluid in the hose can be improved.

In the invention according to claim 2, in addition to the effect of the invention according to claim 1, since the sectional shape of the stretched monofilaments is flattened so that the core width of the stretched monofilaments is larger than the core thickness, a pressure receiving area broadens, the thickness of the hose main body is reduced, and the hose main body does not easily swell in a place where each stretched monofilament is disposed.

Therefore, while improving the pressure-resistant performance, the thickness of the hose can further be reduced to enhance flat degrees of inner and outer surfaces of the hose.

In the invention according to claim 3, in addition to the effect of the invention according to claim 1 or 2, a pitch between the adjacent spirals in the hose axial direction is set to be larger than the interval between the plurality of stretched monofilaments arranged in the hose axial direction, and the see-through coreless portions are partially formed in the hose axial direction, whereby the stretched monofilaments do not disturb, and the fluid passing through the hose can be seen from the coreless portions.

Therefore, the fluid in the hose can be seen from the outside.

In the invention according to claim 4, in addition to the effect of the invention according to claim 1, 2 or 3, opposite end portions of the hose are connected to pipes, respectively, so that the identification line having a color different from that of the hose main body becomes linear in the axial direction, whereby optimum hose piping without any twist is possible. Moreover, even in a case where the piping is short, since the identification line linearly extends in the axial direction, the piping can easily be distinguished from another piping. In addition, it is possible to obtain multiple types of hoses having different appearances due to a color difference between the identification lines.

Therefore, while preventing breakage due to the twist of the hose, the hose can be identified by the identification line in accordance with the use application or the type.

In the invention according to claim 5, in addition to the effect of the invention according to claim 1, 2, 3 or 4, the colors of the plurality of stretched monofilaments arranged in the hose axial direction are changed, and the hose main body is formed of the see-through material, it is possible to obtain multiple types of hoses having different appearances due to the color difference between the stretched monofilaments.

Therefore, the hose can easily be identified by the color of the stretched monofilaments in accordance with the use application or the type.

### Brief Description of the Drawings

FIG. 1 is a partially cut front view of a reinforced spiral hose showing Embodiment 1 of the present invention;
FIG. 2 is a partially cut front view of a reinforced spiral hose showing Embodiment 2 of the present invention; and
FIG. 3 is a partially cut front view of a reinforced spiral hose showing Embodiment 3 of the present invention.

### Best Mode for Carrying out the Invention

A reinforced spiral hose A of the present invention, as shown in FIGS. 1 to 3, has a constitution that, in a hose main body 1 obtained by molding a soft thermoplastic synthetic resin such as a vinyl chloride resin into a cylindrical shape, a plurality of stretched monofilaments 2 having a small diameter and obtained by molding a hard synthetic resin such as a polyester resin or a nylon resin into a coil spring shape are spirally wound at an equal pitch in a hose axial direction while the stretched monofilaments are arranged.

Each embodiment of the present invention will be described hereinafter with reference to the drawings.

### [Embodiment 1]

This embodiment 1 shows a case where, as shown in FIG. 1, a hose main body 1 is molded of a see-through material such as a transparent or translucent material, and in this hose main body 1, two stretched monofilaments 2, 2 arranged in a hose axial direction are spirally wound at an equal pitch in the hose axial direction. Moreover, these stretched monofilaments 2, 2 are flatly formed into an elliptic sectional shape, whereby a core width dimension W of the shape is set to be larger than a core thickness dimension D.

The hose main body 1 is constituted of an inner layer and an outer layer, and two stretched monofilaments 2, 2 are inserted and wound between the inner layer and the outer layer to form the reinforced spiral hose A as described in, for example, Japanese Utility Model Application Publication No. 63-46783. Alternatively, by a conventional known hose manufacturing method described in, for example, Japanese Patent Application Publication No. 50-31198, a band-like member containing two stretched monofilaments 2, 2 is spirally wound, and surfaces disposed adjacent to each other are bonded to each other to form the reinforced spiral hose A.

In more detail, in the hose manufacturing method by laminating as in Japanese Utility Model Application Publication No. 63-46783, first the inner layer is continuously extruded from an extruder in a molten or semi-molten state, and on this inner layer, two stretched monofilaments 2 arranged in the hose axial direction are spirally wound on this inner layer. On the monofilaments, the outer layer in the molten or semi-molten state is continuously extruded from the extruder, and laminated, whereby two stretched monofilaments 2, 2 are integrally inserted and wound between the inner layer and an outer tube.

In the hose manufacturing method by spiral bonding as in Japanese Patent Application Publication No. 50-31198, first the band-like member constituted by coating, with a soft synthetic resin, peripheries of two stretched monofilaments 2, 2 arranged in the hose axial direction is continuously extruded from the extruder in the molten or semi-molten state. While this member is spirally wound with respect to an outer surface of a spiral shaft supported in a cantilever state, adjacent surfaces of the band-like member are bonded to each other, whereby the member is molded into a tubular shape and integrated.

Moreover, in the case of the shown example, a dimension ratio of a pitch S between two stretched monofilaments 2 and 2 arranged in the hose axial direction to a pitch P between adjacent spirals in the hose axial direction is set to 3:7, whereby the spiral pitch P is set to be larger than an interval between both of the stretched monofilaments 2 and 2, namely the pitch S between both of the monofilaments to partially form see-through coreless portions 1a in the hose axial direction. However, the dimension ratio of the pitch S to the spiral pitch P between these stretched monofilaments 2 and 2 is not limited to 3:7. Although not shown, the ratio can be changed and may be set to a ratio other than the above ratio, such as 2:8 or 4:6.

Next, a function and an effect of such a reinforced spiral hose A will be described.

The two stretched monofilaments 2 and 2 arranged in the hose axial direction are spirally wound at the equal pitch in the hose axial direction. Therefore, even when the pitch S between these stretched monofilaments 2 and 2 narrows and diameters of the respective monofilaments are reduced, a pressure-resistant performance of these portions does not deteriorate. In consequence, it is possible to obtain the pressure-resistant performance which is substantially equivalent to or more than a case where one stretched monofilament having a large diameter is wound.

Accordingly, the stretched monofilaments having the reduced diameter are usable, and a thickness dimension T of the hose main body 1 can be reduced as much as the reduction of the diameter. In consequence, a weight of the reinforced spiral hose A can be reduced, and flexibility improves.

In the present embodiment, the sectional shape of the stretched monofilaments 2 is flattened so that the core width dimension W of the monofilaments is larger than the core thickness dimension D. Therefore, a pressure receiving area broadens, and the thickness dimension T of the hose main body 1 is reduced, so that the hose main body 1 does not easily swell in a place where each stretched monofilament 2 is disposed.

In consequence, while improving the pressure-resistant performance, the thickness dimension T of the hose can further be reduced to enhance flat degrees of inner and outer surfaces of the hose.

Furthermore, when the sectional shape of each stretched monofilament 2 is formed into an elliptic shape as shown, there is little adverse influence such as cracks on the hose main body 1 which covers a periphery of the stretched monofilament 2.

Moreover, the pitch P between the adjacent spirals in the hose axial direction is set to be larger than the pitch S between the stretched monofilaments 2 arranged in the hose axial direction to partially form the see-through coreless portions 1a in the hose axial direction. In consequence, the flat stretched monofilaments 2 do not disturb a fluid flow, and a fluid or the like which is passing in the hose can be seen through the coreless portions 1a.

### [Embodiment 2]

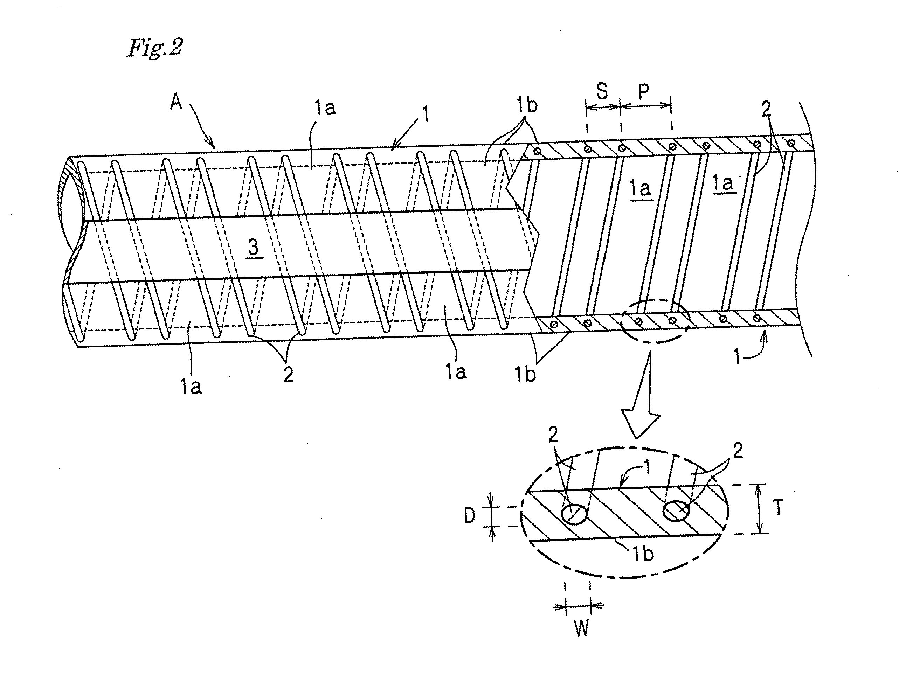

This embodiment 2 is different from Embodiment 1 shown in FIG. 1 described above in a constitution in which, as shown in FIG. 2, an identification line 3 extending in an axial direction is disposed on an outer surface 1b of a hose main body 1, and a color of this identification line 3 is set to be different from that of the hose main body 1, and the other constitution is the same as that of Embodiment 1 shown in FIG. 1.

The identification line 3 is formed by extruding, onto the hose outer surface 1b, a thermoplastic resin such as a vinyl chloride resin or polyethylene which is the same as a material of the hose main body 1 and which has a color different from that of the main body, to integrate both of the line and the outer surface. Alternatively, a thermoplastic-resin-made tape formed of the same material as that of the hose main body 1 and having a different color is heated and brought into contact under pressure with the hose outer surface 1b to integrate the tape with the outer surface.

In the shown example, there is formed only one identification line 3 linearly extending in a hose axial direction, but the number of the lines, or a thickness or a color of each line is not limited to one type. For example, a plurality of lines having different colors and having an equal width dimension may be arranged, a plurality of lines having different width dimensions may be arranged, or the lines may be buried so as to obtain substantially the same plane as that of the hose outer surface 1b. Furthermore, if necessary, as shown, characters indicating, for example, a company name, a diametric size or the like may be superimposed and printed on the identification line 3.

Therefore, in the hose shown in FIG. 2, a function and an effect similar to those of Embodiment 1 described above are obtained. In addition, when opposite end portions of the hose are connected to pipes, respectively, so that the identification line 3 having a color different from that of the hose main body 1 linearly extends in the axial direction, optimum hose piping is possible without any twist. Moreover, even in a case where the piping is short, since the identification line 3 linearly extends in the axial direction, the piping is easily distinguished from another piping. Additionally, it is possible to obtain multiple types of hoses having different appearances due to a color difference between the identification lines 3.

In consequence, there is an advantage that the hose can be identified by the identification line 3 in accordance with a use application or a type, while preventing breakage due to the twist of the hose.

### [Embodiment 3]

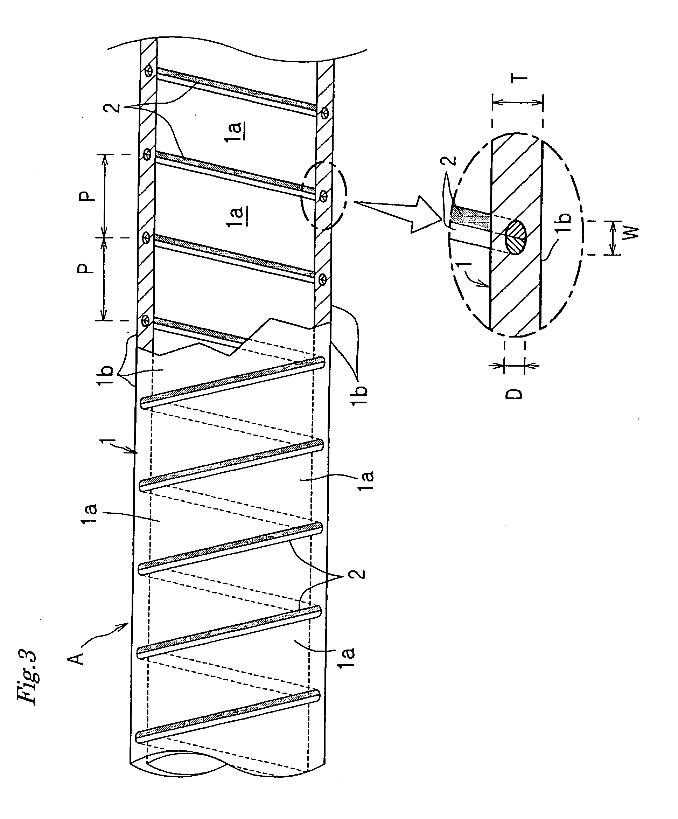

This embodiment 3 is different from Embodiment 1 shown in FIG. 1 described above in a constitution in which, as shown in FIG. 3, colors of two stretched monofilaments 2, 2 arranged in a hose axial direction are changed, and these colors of the stretched monofilaments 2, 2 can be seen from the outside of a hose main body 1, and the other constitution is the same as that of Embodiment 1 shown in FIG. 1.

For example, in a case where at least an outer surface of one stretched monofilament 2 is set to be white, at least an outer surface of the other stretched monofilament 2 has a color other than white, such as a green, red or blue color, and a clearly distinguishable combination is preferable.

Furthermore, in the case of the shown example, a pitch S between the two stretched monofilaments 2 and 2 arranged in the hose axial direction is set to 0 so that the monofilaments abut on each other. Moreover, a sectional shape of the monofilaments is flattened, and for example, the sectional shape in a state in which both of these monofilaments abut on each other is formed to be elliptic, and hence, a core width dimension W of each monofilament is larger than a core thickness dimension D thereof. However, this is not restrictive. As in Embodiment 1 shown in FIG. 1, the stretched monofilaments 2, 2 may be detached from each other, and a dimension ratio of the pitch S to a pitch P between spirals may be set to, for example, 2:8, 3:7, 4:6 or the like.

Moreover, as in the embodiment shown in FIG. 2, the outer surface 1b of the hose main body may be provided with the identification line 3 which extends in the axial direction.

Therefore, in the hose shown in FIG. 3, a function and an effect similar to those of Embodiment 1 described above are obtained. In addition, the colors of two stretched monofilaments 2, 2 arranged in the hose axial direction are changed, and the hose main body 1 is formed of a see-through material. Therefore, it is possible to obtain multiple types of hoses having different appearances due to a color difference between the stretched monofilaments 2 and 2.

In consequence, there is an advantage that the hose can easily be identified by the colors of the stretched monofilaments 2, 2 in accordance with a use application or a type.

It is to be noted that in Embodiments 1 to 3 described above, the hose main body 1 is molded of a see-through material such as the transparent or translucent material, but this is not restrictive, and the hose main body 1 may be formed of an opaque material.

Furthermore, there has been described a case where in the hose main body 1, two stretched monofilaments 2 arranged in the hose axial direction are wound spirally at the equal pitch, but this is not restrictive, and three or more stretched monofilaments 2 arranged in the hose axial direction may be wound spirally at the equal pitch.

In this case, when the number of the stretched monofilaments 2 is increased, the stretched monofilaments having a smaller diameter are usable.

In addition, there has been described a case where the sectional shape of the stretched monofilaments 2 is formed to be elliptic, whereby the monofilaments are flattened so that the core width dimension W of the sectional shape is larger than the core thickness dimension D, but this is not restrictive. Although not shown, the sectional shape of the monofilaments may be flattened in a sectional shape other than the elliptic shape, or may be formed to be a circular sectional shape instead of the elliptic shape.

## Claims

1. A reinforced spiral hose in which a plurality of stretched monofilaments (2) are spirally wound in a hose axial direction in a hose main body (1),
wherein the plurality of stretched monofilaments (2) are spirally wound at an equal pitch in the hose axial direction while the stretched monofilaments (2) are arranged.

2. The reinforced spiral hose according to claim 1,
wherein a sectional shape of the stretched monofilaments (2) is flattened so that a core width (W) of the stretched monofilaments is larger than a core thickness (D) thereof.

3. The reinforced spiral hose according to claim 1 or 2, wherein a pitch (P) between adjacent spirals in the hose axial direction is set to be larger than a pitch (S) between the stretched monofilaments (2) arranged in the hose axial direction to partially form see-through coreless portions (1a) in the hose axial direction.

4. The reinforced spiral hose according to claim 1, 2 or 3, wherein an identification line (3) extending in an axial direction is disposed on an outer surface (1b) of the hose main body (1), and this identification line (3) is provided with a color different from that of the hose main body (1).

5. The reinforced spiral hose according to claim 1, 2, 3 or 4, wherein colors of the plurality of stretched monofilaments (2) arranged in the hose axial direction are changed, and the hose main body (1) is formed of a see-through material.
